# EUROPEAN PATENT APPLICATION

(11) **EP 1 827 057 A2**
(43) Date of publication of application: **29.08.2007**
(21) Application number: 06126408.1
(22) Date of filing: 18.12.2006
(51) Int. Cl.: H04R 7/00

(54) **Display and speaker module**

(30) Priority: 27.02.2006 US 364309
(71) Applicant: Nokia Corporation, 02150 Espoo (FI)
(72) Inventor: Phelps, Andrew, Southampton SO15 2GQ (GB); Ostergard, Toni, 20900 Turku (FI)
(74) Representative: Read, Matthew Charles

(57) **Abstract**

A flat panel display and speaker module (2) for a mobile communication device (1) is provided comprising a flat panel speaker integrated with a flexible liquid crystal display. At least one actuator (28, 29) is glued to a plastic substrate (21, 22) of the flexible display and applies a force onto the plastic substrate for generating bending waves in the flexible display which in turn give rise to sound waves being emitted from the display.

## Description

### Field of the invention

The invention relates to a flat panel speaker. More particularly, the invention relates to a flat panel speaker integrated with a display for a mobile communication device.

### Background

Bending wave and distributed mode loudspeakers (DMLs) provide sound that is in many respects superior to conventional piston speakers. They also operate in a significantly different way. While the diaphragm of a conventional speaker moves as a rigid, coordinated whole to displace air at its surface, the panel of a distributed mode loudspeaker experience multiple, complex and organised bending resonances. An example of such a loudspeaker is disclosed in WO 97/09842 and US 2005/0018865, which are incorporated herein by reference.

A DML comprises an acoustic radiator in the shape of a panel and a vibration transducer mounted to the panel to apply bending wave energy thereto to enable low frequency modes to be excited in the radiator both lengthwise and crosswise of the panel. The radiator is mounted to a supporting frame in a manner that does not constrain the passage of the bending waves.

The position of the vibration transducer is selected in dependence on the physical parameters of the panel and the desired resonant modes. The algorithms for calculating the resonant modes and the position of the transducer are known in the art and will not be described in detail herein.

DMLs can generate an acoustic response from 50Hz to 20kHz. The lowest frequency along one of the orthogonal axes of a rectangular panel is related to the bending stiffness in the specific direction and the length on the panel in that direction. (This assumes an isotropic material with uniform thickness and a homogeneous panel.) The size, shape, thickness and material of the radiator may be chosen to smooth peaks in the frequency response caused by clustering of the resonant modes. Especially at lower frequencies, the density of the frequency resonances is comparatively low and it may be desired to select the properties of the radiator to distribute the lower frequency resonances substantially evenly in frequency.

The transducers used in the speaker may be piezoelectric exciters, such as distributed mode actuators, which convert the signals received from an amplifier into a vibrational force. The force is transferred to the panel by way of a mechanical coupling between the exciter and the panel and generates the desired resonances in the panel.

One of the benefits of DMLs is that the sound produced is less directional than the sound emitted from conventional loudspeakers, especially at high frequencies. Moreover, stereo sound can be achieved from a single panel. Also, DMLs are lighter than conventional loudspeakers and save space, which is particularly welcomed by designers of small devices, such as mobile phones. The display of a mobile phone, which itself requires a flat area, can be integrated with a flat panel DML, allowing the space around the display, which is typically used to house a conventional speaker and earpiece, to be used to house other components of the device. Alternatively, the screen can be made larger or the overall size of the phone can be reduced. Moreover, the fact that the sound is emitted from a larger area eliminates the need for a user of the mobile phone to align the ear channel with a small earpiece when talking on the phone.

Liquid crystal displays are commonplace in mobile communication device design. A display for a mobile phone typically comprises a liquid crystal layer between two glass substrates and is therefore not flexible enough to support bending waves. Instead, the vibrating panel must be provided as an additional layer, typically a transparent display window in front of the liquid crystal screen. One such display is provided by Siemens as part of the Siemens S45 mobile telephone.

However, for multimedia smartphones and advanced mobile phones, display windows in front of the screen are not always desired, since, for example, they may not be compatible with touch screen technology. Furthermore, there are concerns about how best to seal around the display window to prevent dust ingress, but to also allow the surface waves to be satisfactorily generated.

The invention addresses the above and other issues.

### Summary of the Invention

According to the invention, there is provided a module for a mobile communication device comprising a flexible display having a substrate member; at least one transducer mechanically coupled to said substrate member; and speaker circuitry arranged to control the transducer to apply a force to said substrate member such that bending waves are generated in the display, the bending waves giving rise to acoustic signals being emitted from the display.

Consequently, the invention eliminates the need for a display window in front of the screen.

The display may comprise a liquid crystal layer between a first and a second substrate, the display being configured to output light, in use, from the liquid crystal layer through the second substrate towards a viewer. Said substrate member may be the first substrate or an extension of the second substrate.

The transducer may comprise at least one Distributed Mode Actuator.

The flexible display may further provide a touch screen.

### Brief Description of the drawings

Embodiments of the invention will now be described by way of example, with reference to the accompanying drawings, in which:
Figure 1 is a perspective view of a mobile multimedia smartphone handset;
Figure 2 is a schematic diagram of mobile multimedia smartphone circuitry for use in the handset of Figure 1;
Figure 3 is a rear perspective view of an example of a flat panel display and speaker module according to the invention;
Figure 4 is a front perspective view of the flat panel display and speaker module of Figure 3.
Figure 5 is a rear perspective view of another example of a flat panel display and speaker module according to the invention;
Figure 6 is a rear perspective view of yet another example of a flat panel display and speaker module according to the invention;
Figure 7 illustrates how the flat panel display and speaker module of Figure 3 is mounted in the handset of Figure 1.

### Detailed Description

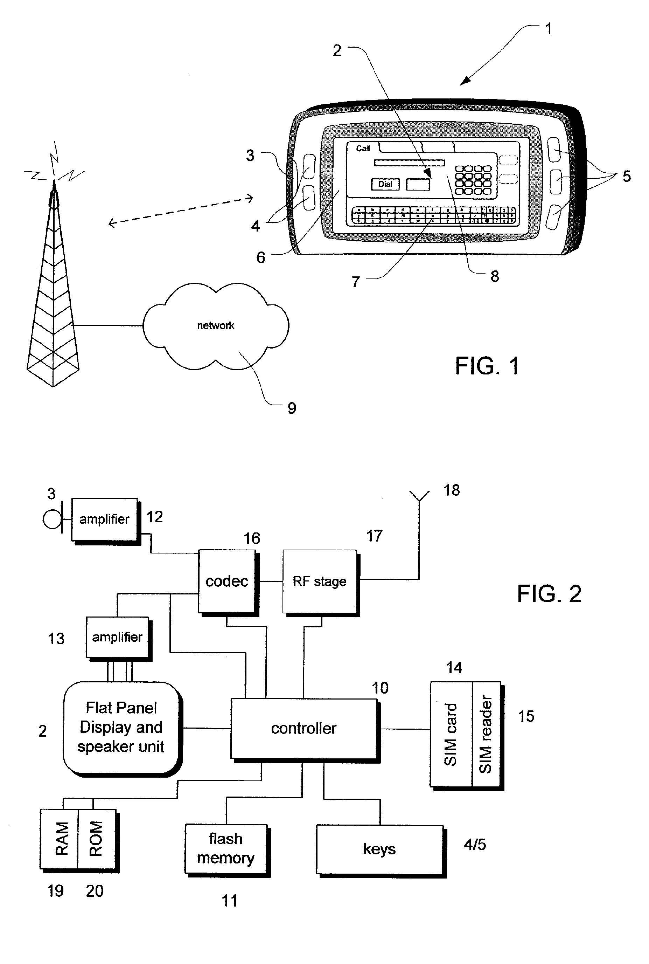

With reference to Figure 1, a mobile communication device in the form of a multimedia smartphone handset 1 comprises a flat panel display and speaker module 2, which provides a display as well as a speaker and an earpiece. The flat panel display and speaker module 2, according to the invention, will be described in more detail below. The handset further comprises a microphone 3, a number of physical keys 4, some of which are soft keys 5 that can be programmed to provide different functions, a battery (not shown) and an antenna (not shown). The flat panel display and speaker module 2 also provides a touch screen 6. A browser running on a processor in the handset provides an on-screen keypad 7 and a virtual dial pad 8 on the touch screen 6 for allowing a user to operate the handset 1. The touch screen can be operated with a stylus and/or a finger. In another configuration of the handset, the keypad and dial pad can be provided by physical keys on the handset.

The handset 1 is operable to communication through cellular radio links with one or more individual land mobile networks 9, which may include but are not limited to GSM, GPRS and CDMA networks. The handset is also operable to connect to the Internet through a server.

Figure 2 illustrates the major components of the handset 1. Signal processing is carried out under the control of a digital microcontroller 10, which has an associated flash memory 11. The microcontroller receives instruction signals from the physical keys 4, 5 and the touch screen 6 provided by the flat panel display and speaker module 2. Electrical analogue audio signals are produced by microphone 3 and amplified by pre-amplifier 12. Similarly, analogue audio signals are fed to the flat panel display and speaker module 2 through an amplifier 13.

Information about the identity of the user is held on a smart card 14 in the form of, for example, a GSM SIM card. The SIM card is removable received in a SIM card reader 15. The handset circuitry includes a codec 16 and an RF stage 17 connected to the antenna 18. The codec 16 receives analogue signals from the microphone amplifier 12, digitizes them into, for example, a GSM signal format and feeds them to the rf stage 17 for transmission through the antenna 18 to the network 9. Similarly, signals received from the network 9 are fed through the antenna 18 to be demodulated in the RF stage 17 and fed to codec 16, so as to produce analogue signals fed to the amplifier 13 and flat panel display and speaker module 2.

The controller is also connected to a random access memory (RAM) 19 and a read-only memory (ROM) 20 storing the operating system. The operating system may be, for example, the Symbian operating system with a Series 90 User Interface. The RAM 19 may further store application programs such as the browser and various games and also data for running the browser and playing the games. The application data may include graphics and associated audio. The controller retrieves the audio data and forwards it to the flat panel display and speaker module 2. It also retrieves the graphics and displays it on the screen of the flat panel display and speaker module at the same time as the associated audio is output.

The flat panel display and speaker unit comprises a flexible display that can also be actuated as a flat panel speaker. The substrate materials and their thicknesses are selected in such a way that the substrates, as well as other material layers, together provide the optimal flexibility for a flat panel speaker system.

One example of a suitable flexible display is flexible liquid crystal displays, which can be obtained from Sharp Corporation of Japan and methods of manufacturing such displays are disclosed in US2001/0002858 A1 and US2005/0237474 A1, which are incorporated herein by reference.

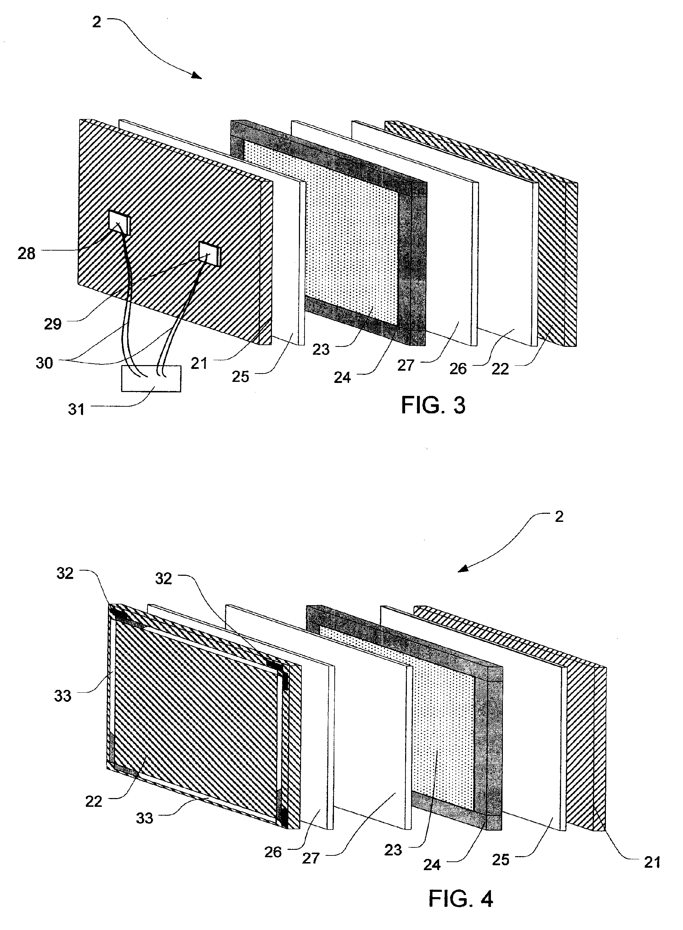

Referring to Figure 3, a suitable liquid crystal display includes a first flexible substrate 21, the back substrate, a second flexible substrate 22, the front substrate, and a liquid crystal layer 23 sealed between the first and second flexible substrate with a sealant 24. Integrated circuit films (ICs) 25, 26 overly the surfaces that face the liquid crystal layer of the first and second flexible substrates. A colour filter 27 is provided between the liquid crystal layer 23 and the second flexible substrate 22. The first and second flexible substrates are provided with phase difference polarizing plates(not shown) as is well known in the art.

The colour filter 27 is shown as an example only and could be provided in another suitable location of the flat panel display and speaker module 2. Furthermore, it is contemplated that the display also comprises alignment layers and insulation layers. Moreover, in other configurations of the module, one of the IC films 25, 26 may be removed. Spacers may be provided in the layer of liquid crystals 23 as in well known in the art. A backlight (not shown) would also be provided and light from the backlight would enter the module through the first substrate and leave the module through the second substrate towards a viewer of the display.

The first and second flexible substrates of Figure 3 are made of plastic or other organic material such as polyether sulfone. The IC films 25, 26 may include an active matrix of thin film transistors (TFTs). The transistors may be based on silicon, for example amorphous silicon or low-temperature polysilicon. Alternatively, the transistors may be organic transistors. Furthermore, instead of transistors, the IC films may comprise a passive matrix drive using column and row electrodes. The sealant 24 may comprise an epoxy resin-based acrylic resin, which is hardened by baking.

According to the invention, two transducers 28, 29 are provided on the surface of the first flexible substrate facing away from the liquid crystal layer, which are connected by wires or tracks 30 to speaker electronics 31. The speaker electronics comprises the amplifier 13 of Figure 2. The transducers, the speaker electronics and the flexible substrates together make up the DML.

The locations of the transducers are selected so as to achieve the desired resonant frequencies. The transducers may be attached to the first substrate using an adhesive. The electrical connections 30 to the transducers can be provided as an integrated part of the display electronics on the flexible substrate 21. Alternatively, separate, wired connectors can be used. The electronics can be electrically coupled to the main phone circuit on a printed circuit board located in the handset. When fed with a stereo signal from the amplifier 13 and subject to a 3D widening algorithm, the vibrations in the display generated by the transducers produce 3D sound. Thus, the flat panel display and speaker unit according to the invention provides 3D sound from a single panel, without a display window and without any holes in the cover of the handset for sound output. If only one transducer is used, the single panel can still achieve mono sound. More than two transducers can also be included for additional sound pressure levels and spatial effects.

The transducers 28, 29 may be Distributed Mode Actuators (DMAs), which are operable to generate a modal exciting force to be applied to the flexible substrates. A DMA typically comprises two thin beams laminated with piezoelectric ceramics, which produce bending resonances within the beams when subject to a suitable signal. The beams are connected to the resonating substrate through a small stub. The DMA is designed such that its modal characteristics match the flexible display. An example of a suitable DMA is a NXT Gen2 Distributed Mode Actuator™ from NXT™. The transducers shown in Figure 3 are schematic only and not to scale. DMAs are typically much smaller. However, they are shown in a larger scale in Figure 3 for the sake of clarity.

The touch screen functionality of the flat panel display and speaker module 2 may be provided by surface acoustic wave technology and transducers and reflectors may be provided on the second substrate to register a touch event. Touch screen technology is well known in the art per se and will not be discussed herein in any great detail. Referring to Figure 4, transducers 32 for providing the touch screen functionality are located along the x and y-axis and reflectors 33 along the periphery of the substrate reflect the acoustic waves such that they radiate throughout the substrate. If the substrate is touched with a finger, the finger will absorb some of the wave energy and the location of the touch event can thereby be detected. Other suitable touch screen technologies are also possible, such as technologies based on resistance, capacitance and bending waves.

However, it will be realised that touch screen functionality is not an essential feature of the invention. The example of a touch screen is described to illustrate that the structure of the flat panel display and speaker module is compatible with touch screen technology in contrast to some prior art displays in which a display window provides the speaker function. Thus, the flat panel display and speaker unit may also be provided without the touch screen functionality.

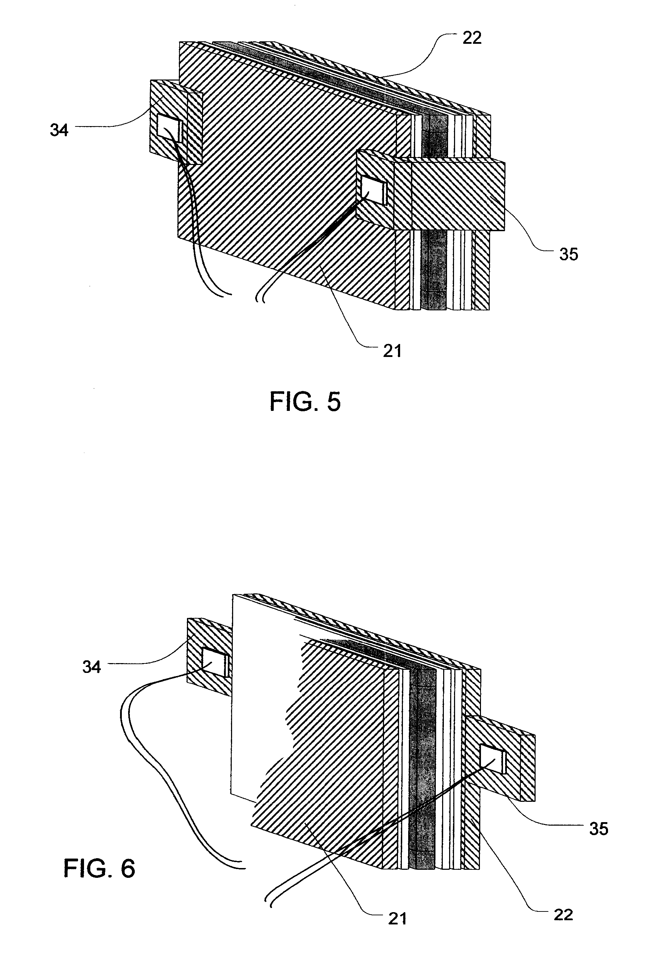

Referring now to Figure 5, although the actuators for creating the bending waves in the radiating panel are preferably located below the display when the display is mounted in a handset, they may also be glued to the second substrate 22. The second substrate 22 may have extensions 34, 35 to which the actuators may be glued as shown in Figure 5. It should be realised that Figure 5 is only one example of how the extensions may be arranged. The exact shape and size of the extensions are dependent on the size, material and configuration of the substrate in order for the bending waves to exhibit the desired frequencies. The extensions may be provided as integral part of the second substrate 22. Alternatively, they may be separate units mechanically coupled to the second substrate 22.

Another example of extensions 34, 35 of the second substrate on which the actuators can be glued is shown in Figure 6. In contrast to the substrate extensions of Figure 5, the substrate extensions 34, 35 of Figure 6 extend in the plane of the second substrate 22 and do not bend around the first substrate 21. Some of the layers of the flat panel display and speaker module 2 are only partly shown in Figure 5 to allow both extensions 32, 33 of the second substrate 22 to be clearly shown.

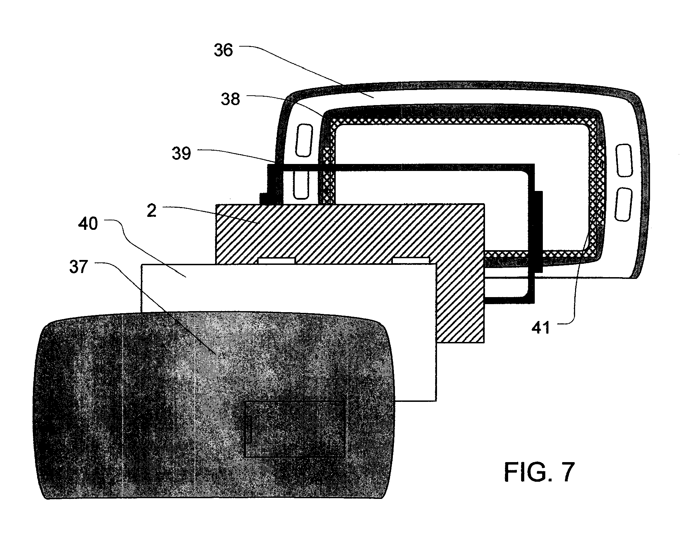

It is important that the flat panel display and speaker module 2 is securely mounted in the handset 1 without the flexibility of the panel and its ability to generate the desired resonances being impaired. Referring to Figure 7, the handset 1 comprises a front cover 36 and a back cover 37. The front cover has openings for the physical keys 4, 5 and for the flat panel display and speaker module 2. The module 2 is fitted onto a mounting frame 38 on the front cover 36 using a gasket 39. It is further electrically connected to a printed circuit board 40. The physical keys and other components of the handset are also electrically connected to the printed circuit board 40. The gasket 39, the flat panel display and speaker module 2, the printed circuit board 40, the physical keys 4, 5, the battery and any other additional components of the smartphone are all placed between the front cover and the back cover before the front cover and the back cover are, for example, snap-fitted or screwed together.

The connection of the flat panel display and speaker module to the front cover 36 will now be described in more detail. The frame 38 may be moulded at the back of the front cover 36 around the opening for the module 2. The frame may have a shape corresponding to the shape of the gasket 39. At the time of assembling the phone, the flat panel display and speaker module 2 may be attached along its periphery to the gasket 39 using an adhesive. The gasket 39 is then securely attached to the frame 38. The frame may have stubs that fit into holes in the gasket or vice versa. The frame and the gasket may, alternatively, be snap-fitted together. Yet another possibility involves the frame and the gasket being glued together. The connection between the flat panel display and speaker module 2 and the front cover 36 holds the bending wave panel into the handset but does not constrain the passage of surface waves. The gasket 39 may include but it not limited to a carefully designed gasket made of cellular urethane foams, for example a Poron™ gasket. Other ways of mounting the display to the handset are possible and the above example should be interpreted as exemplary rather than limiting.

It will be understood that while the flat panel display and speaker module has been described and illustrated with respect to flexible LC displays of specific dimensions and shape, this is merely a specific example of the invention, and modifications and variations are possible. Firstly, the flexible LCD display may be based on various liquid crystal technologies, including but not limited to Nematic, Smectic, Cholesteric, Polymer Network and Polymer Dispersed liquid crystal technologies. Moreover, the liquid crystal display may be replaced by a display based on electrophoretic display technology and using a suitable flexible plastic substrate or metal foil. Such a display could, for example, use E-ink™ from E-ink Corporation. Other possible displays include, but are not limited to, flexible Organic Light Emitting Displays using a flexible plastic substrate or metal foil and flexible plasma displays.

Moreover, although the handset in which the module 2 is mounted has been described to be a multimedia smartphone, the module could also be used in a normal mobile telephone or any other device requiring both a speaker and a display.

## Claims

1. A module for a mobile communication device comprising:
a flexible display having a substrate member;
at least one transducer mechanically coupled to the substrate member; and
speaker circuitry arranged to control the transducer to apply a force to said substrate member such that bending waves are generated in the flexible display, the bending waves giving rise to acoustic signals being emitted from the module.

2. A module according to claim 1, wherein the flexible display comprises a liquid crystal display, organic light emitting diodes or a plasma display.

3. A module according to claim 1 or 2, wherein the at least one transducer comprises at least one Distributed Mode Actuator.

4. A module according to claim 1, 2 or 3, wherein the at least one transducer comprises two transducer arranged to control the module to produce 3D sound when a stereo signal modified by a 3D algorithm is received from the speaker circuit therein.

5. A module according to claim 1, wherein said flexible display comprises a liquid crystal layer between a first and a second substrate, the display being configured to output light from the liquid crystal layer through the second substrate towards a viewer when in use, and wherein the substrate member constitutes the first substrate or is an extension of the second substrate.

6. A module according to any one of the preceding claims, wherein a touch screen is provided by the flexible display.

7. A module according to any one of the preceding claims, wherein the substrate member is made of plastics material.

8. A module according to claim 7, wherein the plastics material comprises polyether sulfone.

9. A mobile communication device comprising the module of any one of the preceding claims.

10. The mobile communication device of claim 9, configured to operate in a GSM network.

11. A mobile communication device comprising
a distributed modal loudspeaker including a distributed modal speaker panel provided by a plastic substrate of a flexible LCD.
